(19) Europäisches Patentamt
European Patent Office
Office européen des brevets

(11) Veröffentlichungsnummer : **0 147 553**
**B1**

(12) **EUROPÄISCHE PATENTSCHRIFT**

(45) Veröffentlichungstag der Patentschrift : **19.08.87**

(51) Int. Cl.[4] : **C 08 J 3/02**, C 08 L 63/00

(21) Anmeldenummer : **84112492.8**

(22) Anmeldetag : **17.10.84**

(54) **Epoxidharz-Polyammoniumsalz-Emulsion und Verfahren zu ihrer Herstellung.**

(30) Priorität : **15.12.83 DE 3345398**

(43) Veröffentlichungstag der Anmeldung : **10.07.85 Patentblatt 85/28**

(45) Bekanntmachung des Hinweises auf die Patenterteilung : **19.08.87 Patentblatt 87/34**

(84) Benannte Vertragsstaaten : **AT BE CH DE FR GB IT LI NL SE**

(56) Entgegenhaltungen :
**EP-A- 0 005 617**
**EP-A- 0 043 463**
**GB-A- 1 244 424**
**US-A- 3 640 909**
**CHEMICAL ABSTRACTS, Band 85, 1976, Seite 42, Nr. 95244z, Columbus, Ohio, US**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Weiss, Jörn-Volker, Dr.**
**Im Hadkamp 1**
**D-4358 Haltern 3 (DE)**

**EP 0 147 553 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es bedurfte wahrscheinlich erst des spektakulären Zusammenbruchs eines so technisch anspruchsvollen Bauwerks wie das der Berliner Kongreßhalle, daß die breite Öffentlichkeit Notiz von dem schlechten Bauzustand vieler nach dem 2. Weltkrieg errichteter Stahlbaukonstruktionen nimmt.

Der Fachmann beobachtet schon seit einigen Jahren, daß sich der Zustand vieler erst in jüngerer Zeit fertiggestellter Bauwerke teilweise dramatisch verschlechtert. Für diesen Trend lassen sich eine Reihe von Ursachen anführen :

1. Während ältere Bauwerke vielfach in massiver Bauweise erstellt wurden, werden bei neueren Bauwerken aus örtlichen Gegebenheiten und wirtschaftlichen und ästhetischen Aspekten feingliedrige Konstruktionen bevorzugt.

2. Nicht nur die wechselnden Witterungsbedingungen (Temperaturen, Sonneneinstrahlung, Feuchtigkeit), sondern auch in zunehmendem Maße chemische Einflüsse (Streusalz, Kohlendioxid, Stickoxide, Schwefeldioxid) tragen dazu bei, daß sich die Qualität der Bausubstanz rapide verschlechtert.

3. Die Folgen der kombinierten physikalischen und chemischen Einwirkungen sind die Carbonatisierung des Betons, die Aufhebung der Passivierung, die Bildung von Rost und schließlich das Abplatzen der Überdeckung.

4. Gleichzeitig nehmen die Belastungen zu. Brückenkonstruktionen sind durch den Schwerlastverkehr und das zunehmende Verkehrsaufkommen einer zusätzlichen Beanspruchung ausgesetzt.

Ein Abriß und Wiederaufbau beschädigter Bauwerke läßt sich nur in seltenen Fällen wirtschaftlich rechtfertigen. Es geht also darum, die beschädigten Bauwerke zu erhalten. Gesucht sind Verfahren, mit denen eine Sanierung durchgeführt werden kann ; gesucht sind insbesondere Materialien, die für derartige Sanierungen geeignet sind. Aufgrund ihrer chemischen Verträglichkeit mit Stahl und Beton haben sich Epoxidharz-Zement-Mörtel (ECC) besonders bewährt.

Ein kunststoffhaltiges Bindemittel wird beispielsweise in der DE-B 1 198 267 beschrieben. Es besteht aus einem hydraulischen Zement, Wasser, einem bei gewöhnlicher Temperatur härtbaren Harz, z. B. einem Epoxidharz, und einem Härtungsmittel. Die Herstellung dieses Bindemittels ist umständlich, da zwei Vormischungen getrennt voneinander hergestellt werden müssen und erst unmittelbar vor Gebrauch vereinigt werden dürfen. Die relativ kurze Verarbeitungszeit von etwa 1 bis 2 Stunden ist der grundsätzliche Mangel nicht nur dieses Systems, sondern aller sogenannter 2K-Systeme (siehe beispielsweise DE-A 2 840 874). Nach jedem Gebrauch müssen alle Arbeitsgeräte, die mit dem Bindemittel in Berührung gekommen sind, gründlich gereinigt werden, wenn es nicht zu schwer zu entfernenden Ablagerungen, Verstopfungen etc. kommen soll.

Gegenstand der US-A 3 926 886 ist eine 1K-Epoxidharz-Diammoniumacetat- oder -formiat-Emulsion, die aus einem flüssigen Epoxidharz, Wasser und einem substituierten Diammoniumsalz besteht. In Gegenwart von Zement findet die Härtung statt.

Das Diammoniumsalz soll bei diesem Verfahren eine doppelte Funktion einnehmen : einmal soll es nach Reaktion mit dem alkalisch wirkenden Zement das zugrundeliegende Diamin freisetzen, das dann das Epoxidharz aushärter, zum anderen soll es die Funktion eines Emulgators wahrnehmen. Die Stabilität der auf diese Weise erhaltenen Emulsion ist jedoch nicht gewährleistet, insbesondere dann nicht, wenn unter extremen Witterungsbedingungen gearbeitet werden muß. Daher wird bereits in der US-PS 3 926 886 vorgeschlagen, der Mischung bis zu 15 % eines handelsüblichen Emulgators zuzusetzen. Indessen bleibtauch nach solchen Zusätzen die Stabilität der Emulsion eine kritische Größe.

Die Aminkomponente soll also nicht, wie dies beispielsweise in der EP-A1-0 043 463 beschrieben ist, mit Epoxidharzen bei erhöhter Temperatur zu Addukten reagieren, die durch Zusätze von Säure wasserlöslich und dispergierbar gemacht werden, vielmehr geht es hier darum, eine Emulsion aus einem Diammoniumsalz und einem Epoxidharz herzustellen, bei der erst nach Zusatz eines alkalisch reagierenden Stoffes der Aushärtungsprozeß bei Temperaturen über O °C eingeleitet wird.

Der einschlägigen Patentliteratur sind zahlreiche Emulgatoren für wäßrige Epoxidharz-Dispersionen zu entnehmen :

US-A 3 879 324

Oberflächenaktive Stoffe, wie anionische und kationische Verbindungen ;

CA-A 879 750

Mischungen aus Nonylphenoxypoly-(ethoxy)$_{19}$-ethanol und Alkylphenolpolyglykolethern mit 4 bis 9 Mol angelagertem Alkylenoxid ;

DE-C 2 800 323

Poly-(ethylenoxid)-ester von Fettsäuren ;

DE-B 1 669 772

Anlagerungsprodukte von 25 bis 30 Molen Alkylenoxid an Abietinsäure ;

US-A 3 020 250

Synthetische Verbindungen, Proteine ;

DE-A 1 925 941

Amin-Epoxidharz-Kondensationsprodukte ;

DE-B 2 332 165

Mischungen aus Abietinsäurepolyglykolestern, Polyglykolethern von Fettsäuren und/oder Polyglykolethern von p-Alkylphenol und langkettiger aliphatischer Alkohole mit 8 bis 18 Kohlenstoffatomen.

Schließlich beschreibt die DD-C 135 915 2K-Dispersionen aus einem Polysulfid, einem Polyepoxid und Polyvinylalkohol, die als Beschichtungsmittel oder als Zementzusatz Verwendung finden. Baumaterialien, die organisch gebundenen Schwefel enthalten, werden wegen ihrer erhöhten Korrosionsgefahr im Hinblick auf Stahl in der Praxis vermieden.

In jüngster Zeit konnten 2 Formulierungen entwickelt werden, die denen der amerikanischen Patentschrift 3 926 886 hinsichtlich Verfügbarkeit der Aminokomponente, Stabilität der Emulsion und Anwendungsbreite eindeutig überlegen sind.

Gegenstand der DE-A 3 222 531 sind Emulsionen, die aus einem Epoxidharz, einem primären aliphatischen $C_{12-14}$-Alkohol und/oder dessen Addukt mit Ethylenoxidgruppen, Wasser und dem Salz eines Alkylendiamins und Oxalsäure bestehen.

In der DE-A 3 222 528 wird als latenter Härter das Salz aus einem Polyamin oder einem Polyaminoamid mit Oxalsäure verwendet.

Trotz der erzielten Verbesserungen bleibt die Stabilität der Emulsion eine kritische Größe. Probleme treten insbesondere dann auf, wenn die Epoxidharze selbst nicht wasseremulgierbar sind. Darüber hinaus macht sich bei der Herstellung der ECC-Mörtel die Bildung von Luftporen negativ bemerkbar.

Ein Ziel der vorliegenden Erfindung war es daher, verbesserte Epoxidharz-Polyammoniumsalz-Emulsionen zu entwicklen. Ein weiteres Ziel dieser Erfindung war es, Emulsionen für den Baubereich zur Verfügung zu stellen, die problemlos verarbeitbar sind. Schließlich sollten die Emulsionen nicht nur im Bereich der Sanierung, sondern auch in möglichst vielen anderen Anwendungsgebieten einsetzbar sein.

Es wurden jetzt Emulsionen gefunden, die diesen Zielvorstellungen entsprechen. Ihre Zusammensetzung ist Gegenstand der Ansprüche 1 bis 4, Anspruch 5 betrifft ein Herstellverfahren und die Ansprüche 6 bis 8 verschiedene Anwendungsmöglichkeiten.

Es war zwar bekannt, daß sich durch bestimmte Polymerzusätze, wie beispielsweise Polyvinylalkohole, die Flexibilität von Betonen bedeutend erhöhen läßt (EP-A 0 055 035), aber es ist auch bekannt, daß Betone, die Polyvinylacetat enthalten, sich in der Praxis nicht bewährt haben. Dies liegt daran, daß es unter Einwirkung von Feuchtigkeit zu einer Verseifung des Polyvinylacetats und damit zu einer Bildung von Polyvinylalkohol kommt. Gleichzeitig verschlechtern sich die betontechnischen Eigenschaften (vgl. DE-A 3 136 737).

Es sei ausdrücklich darauf hingewiesen, daß unter Emulsionen im Rahmen dieser Anmeldung nicht nur die 2-Phasen-Systeme gemeint sein sollen, die durch Dispersion einer flüssigen Phase in einer anderen flüssigen Phase entstanden sind, sondern auch jene Systeme, in denen eine feste Phase in einer flüssigen Phase dispergiert ist sowie alle Übergänge dieser beiden Systeme.

Die Komponenten der Emulsionen gemäß der vorliegenden Erfindung können wie folgt näher charakterisiert werden :

Bei den Epoxidharzen handelt es sich um flüssige Verbindungen auf Basis von 2,2-Bis-(4-hydroxyphenyl)-alkanen und Epichlorhydrin oder Glycidol. Die präzise chemische Struktur der im Handel erhältlichen Produkte, wie EUREPOX® DER Fa. Schering, Berlin, ist unbekannt. Besonders geeignet sind in Wasser emulgierbare Epoxidharze, wie Z. B. RÜTAPOX® VE 2913 der Fa. Bakelite GmbH, Duisburg.

Der latente Härter stellt das Ammoniumsalz aus einem Polyamin und einer organischen Säure dar. Erfindungsgemäss verwendet wird

I. ein Polyamin der Formel $H_2N\text{-}(CH_2\text{—}CH_2\text{—}NH)_x\text{-}H$ mit $x = 2,3$ und 4, wie z. B. Diethylentriamin (DETA), Triethylentetramin (TETA) und Tetraethylenpentamin (TEPA), oder

II. das Reaktionsprodukt, das man durch Umsetzung der genannten Polyamine mit einer unterstöchiometrischen Menge von Fettsäuren erhält. Üblicherweise geht man von dimerisierten ungesättigten Fettsäuren, beispielsweise Linolsäure, aus. Derartige Produkte enthalten neben den reaktiven Aminogruppen Amidgruppen und vielfach auch Imidazolin-Einheiten (vgl. auch H. Lee, C. Neville « Handbook of Epoxy Resins » McGraw Hill, New York, Seiten 10 bis 2 ff.). Die genaue chemische Struktur der im Handel erhältlichen Produkte, wie z. B. VERSAMID® 125 (vgl. DE-OS 2 262 791) und VERSAMID® 140 sowie EUREDUR® 250 der Fa. Schering, Berlin, ist nicht bekannt.

Die Menge der Aminokomponente richtet sich nach den Angaben des Epoxidharzherstellers, z. B. dem Epoxidwert des eingesetzten Epoxidharzes oder dem angegebenen Mischungsverhältnis von Harz und Härter.

Die geeigneten organischen Säuren können ein- und zweibasig sein, Hydroxylgruppen enthalten und bis 12 C-Atome aufweisen. Sie können gesättigt und auch ungesättigt, aliphatisch, cycloaliphatisch oder aromatisch sein. Bevorzugt werden Ameisensäure, Essigsäure, Oxalsäure, Adipinsäure, Weinsäure und Phthalsäure.

Die für die Emulsion notwendige Wassermenge hängt im wesentlichen von der Art der Aminokomponente ab. Bei den Polyaminen liegt die Wassermenge zwischen 30 und 75 %, bei den Umsetzungsprodukten dieser Polyamine mit Fettsäuren zwischen 200 und 350 %, jeweils bezogen auf die vorgesehene Menge Epoxidharz. Die optimale Wassermenge kann durch Vergleichsversuche leicht ermittelt werden.

Als Emulgator wird verwendet :

1. ein durch Verseifung von Polyvinylacetat gewonnener Polyvinylalkohol mit einem Hydrolysegrad von mindestens 70 % und einem Molekulargewicht von mindestens 5 000, insbesondere von 10 000 bis 100 000 (siehe Römpps Chemie-Lexikon, 7. Auflage),

2. ein Polyoxazolin mit einem Molekulargewicht von 10 000 bis 100 000 erhalten durch Polymerisation von 2-Alkyl-Δ2-oxazolinen, wobei die Alkylgruppe 1 bis 5 C-Atome aufweist (siehe DE-OS 3 036 119 und Angew. Chemie 78, 913 (1966),

3. ein Copolymerisat des N-Vinylpyrrolidons mit

a) Vinylestern ein- oder zweibasiger Carbonsäuren mit bis zu 6 C-Atomen,
b) (Meth)Acrylester von ein- und zweiwertigen Alkoholen mit bis zu 6 C-Atomen,
c) Malein-, Fumar-, Crotonsäure und/oder
d) Styrol.

N-Vinylpyrrolidon-Copolymerisate sind in folgenden deutschen Patentschriften beschrieben : 2 218-935, 2 255 263, 2 456 807 und 2 514 127.

Besonders geeignet ist COLLACRAL® VL, ein Produkt der Fa. BASF, Ludwigshafen.

Der Emulgator wird — bezogen auf die Epoxidharzmenge — in Mengen von 0,5 bis 40 % eingesetzt.

Beim Vermischen der Emulsion mit Frischbeton kann es zu unerwünschter Luftporenbildung kommen. Sie läßt sich auf einfache Weise durch Zusatz von 0,5 bis 5 Gewichtsprozent Entschäumer, bezogen auf das Gesamtgewicht der Emulsion, unterdrücken. Geeignet sind insbesondere Entschäumer auf Silicon- oder Kohlenwasserstoffbasis, wie z. B. RD Entschäumer-Emulsion der Fa. Dow Corning, Düsseldorf, Entschäumer NOPCO® der Fa. Münzing Chemie GmbH, Heilbronn, oder die DEHYDRAN®-Typen der Fa. Henkel KGaA.

Zusätzlich können weitere Hilftsstoffe, wie Betonverflüssigungsmittel und Beschleuniger, den Emulsionen zugesetzt werden (siehe EP-A 0 090 434).

Betonverflüssigungsmittel auf Basis von Melaminharzen, wie z. B. MELMENT® (Hersteller : Süddeutsche Kalkstickstoff-Werke AG, D-8223 Trostberg), dienen dazu, die Fließfähigkeit von Mörtelmischungen zu erhöhen. Ihr Anteil beträgt 0,1 bis 8 %, bezogen auf das Gesamtgewicht der Emulsion.

Die Funktion der Beschleuniger besteht darin, eine schnelle und vollständige Aushärtung des Epoxidharzes zu bewirken.

Geeignet sind im Prinzip bekannte N- und P-haltige Verbindungen, insbesondere tertiäre Amine mit bis zu 20 C-Atomen und Ester phosphoriger Säuren mit bis zu 25 C-Atomen, wie z. B. N-Benzyldimethylamin und Triphenylphosphit. Sie werden in Mengen von 2 bis 5 %, bezogen auf das Epoxid, eingesetzt.

Die Herstellung der Emulsionen erfolgt zweckmäßigerweise in der Weise, daß man

zunächst eine wäßrige Lösung des Emulgators vorlegt,
gegebenenfalls einen Entschäumer zufügt,
die Säure zusetzt,
soviel Polyamin zufügt, bis ein pH-Wert von 6 bis 6,5 erreicht ist,
gegebenenfalls weitere Hilfsstoffe, wie beispielsweise Betonverflüssigungsmittel und Beschleuniger, zufügt und
schließlich in die erhaltene Mischung das flüssige Epoxidharz einrührt.

Abweichungen von diesem üblichen Herstellverfahren sind möglich und können in Einzelfällen vorteilhaft sein. So kann beispielsweise die Reihenfolge der Zugabe von Säure und Polyamin vertauscht werden. Man kann auch das Polyammoniumsalz vorher separat herstellen und dann der Mischung zusetzen. Entscheidend ist in allen diesen Fällen, daß der pH-Wert der Mischung unter 7, besser unter 6,5 liegen muß, wenn das Epoxid eingerührt wird. Andererseits sollte der pH-Wert aber auch nicht unter 6 liegen, da sonst dem hydraulischen Bindemittel zuviel Alkalität entzogen wird. Nach beendeter Zugabe wird noch 0,5 bis 1,0 Stunden nachgerührt. Es werden so Emulsionen erhalten, die bei Raumtemperatur über Monate stabil sind. Beim Auftreten einer Phasentrennung lassen sich die Mischungen durch erneutes Rühren schnell wieder homogenisieren.

Die Emulsionen besitzen die Eigenschaft, erst in Gegenwart von alkalischen Agentien, wie anorganischen Basen, Zement und anderen alkalisch abbindenden Bindemitteln auszuhärten. Zwar wird üblicherweise die Härtung in Gegenwart von Zement durchgeführt, geeignet sind jedoch beispielsweise auch Härtungsmischungen, die Alkali- oder Erdalkalihydroxide, Calciumoxid oder andere basisch reagierende Oxide enthalten. Mineralische Füllstoffe, wie Sand, feingemahlenes Siliciumdioxid und ähnliche Füllstoffe, beeinträchtigen die Härtung nicht.

Die Emulsionen gemäß der vorliegenden Erfindung sind in überaus vielfältiger Weise im Baubereich einsetzbar, wobei die Sanierung bereits bestehender Bauten ein Anwendungsschwerpunkt ist.

Besonders geeignet sind die Emulsionen für den Einsatz im Trockenspritzbetonverfahren (vgl. DE-A 3 136 737). Wenn etwa senkrechte Mauern, Decken, Rohre oder Tunnel mit Beton behandelt werden sollen, benötigt man Betonmischungen, die nach Aufspritzen möglichst quantitativ an der Mauer haften bleiben. Die vorliegenden Emulsionen erfüllen diese Forderung. Durch eine variable Zumischung der hier

beschriebenen Emulsionen zu dem benötigten Anmachwasser ist es möglich, je nach Anforderung des Untergrunds mit unterschiedlichem Kunststoff/Zement-Verhältnis zu arbeiten. Vorzugsweise beträgt das Wasser/Zement-Verhältnis 0,35 bis 0,65 und das Verhältnis von Epoxid und Polyamin zu Zement 0,035 bis 0,15.

Ausgehärtete ECC-Mörtel weisen im Vergleich zu herkömmlichen Mörteln eine höhere Widerstandfähigkeit gegenüber dem Eindringen von Wasser auf. Dies gilt auch für wäßrige Chemikalienlösungen. Aus diesem Grunde eignen sich die Emulsionen in hervorragender Weise zur Herstellung von Fertigbaubetonteilen, wie z. B. Abwasserrohren.

Spachtel- und Klebemassen auf Basis hydraulisch abbindender Bindemittel, die etwa im Fliesenbereich eingesetzt werden, enthalten vorteilsweise in Mengen zwischen 3 und 75 % die beschriebenen Emulsionen. Haftfestigkeit und Verarbeitungszeit entsprechen den in diesem Bereich geforderten Werten.

Das gleiche gilt auch für Injektionsmassen auf Basis hydraulisch abbindender Bindemittel, die zur Sanierung von Bauten aller Art verwendet werden. Auch hier kommt es auf hohe Haftfestigkeit an.

Schließlich werden die Emulsionen zur Herstellung von Estrichen verwendet, insbesondere dann, wenn die Oberfläche besonderen Belastungen ausgesetzt ist.

a) Herstellung der Emulsionen

(Die Mengenangaben der Oxalsäure beziehen sich stets auf das Dihydrat.)

## Beispiel 1

In einem Standkolben mit mechanischem Rührer werden 300 Gewichtsteile Wasser, 100 Gewichtsteile einer wäßrigen 10 %igen Polyvinylalkohollösung (PVAL GH-20 der Fa. Nippon Synthetic Chemical Industry Co., Ltd., Osaka, Japan) und 5 Gewichtsteile eines siliconhaltigen Entschaümers (RD Entschäumer-Emulsion der Fa. Dow Corning, Düsseldorf) vorgelegt. In der erhaltenen Mischung werden 18 Gewichtsteile Oxalsäure und 25 Gewichtsteile Essigsäure gelöst. Anschließend werden 100 Gewichtsteile des Polyaminoamids VERSAMID® 140 (Fa. Schering, D-1000 Berlin) portionsweise so hinzugefügt, daß die Reaktionstemperatur 70 °C nicht überschreitet. Das Reaktionsgemisch wird so lange gerührt, bis das Polyammoniumsalz homogen verteilt ist. In das Gemisch werden 200 Gewichtsteile des Epoxidharzes RÜTAPOX® VE 2913 eingerührt. Nach erfolgter Zugabe wird die Emulsion noch 1 Stunde gerührt.

(Siehe Tabellen Seite 6 ff.)

Tabelle 1

| Zusammensetzung | Beispiele 1 | 2 | 3 | 4 | 5 |
|---|---|---|---|---|---|
| Wasser | 300 | 400 | 120 | 400 | 300 |
| Emulgator[1)] | 100 | 100 | 100 | 100 | 100 |
| Entschäumer[1)] | 5 | 5 | 6 | 6 | 5 |
| Säure | Oxals./Essigs. | Oxals./Essigs. | Oxalsäure | Oxals./Weins. | Oxals./Essigs. |
| Säuremenge | 18/25 | 25/31 | 54 | 23/25 | 18/25 |
| Polyamin | VERSAMID® 140 | VERSAMID® 125 | VERSAMID® 140/TETA | EUREDUR® 250[2)] | VERSAMID® 140 |
| Polyaminmenge | 100 | 178 | 20/27 | 102 | 100 |
| Epoxidharz | RÜTAPOX® VE 2913 | RÜTAPOX® VE 2913 | RÜTAPOX® VE 2913 | RÜTAPOX® VE 2913 | EPIKOTE® 828 |
| Epoxidharzmenge | 200 | 200 | 240 | 200 | 200 |

1) wie in Beispiel 1 angegeben
2) Es handelt sich um ein Produkt der Fa. Schering AG, Berlin.

Tabelle 2

| Zusammensetzung | Beispiele | | | |
|---|---|---|---|---|
| | 6 | 7 | 8 | 9 |
| Wasser | 100 | 80 | 80 | - |
| Emulgator | COLLACRAL® VL | COLLACRAL® VL | PVAL GH-20 2) | PVAL GH-20 2) |
| Emulgatormenge | 33 | 35 | 100 | 100 |
| Entschäumer 1) | 4 | 4 | 5 | 5 |
| Polyammoniumsalz | TETA/Oxalsäure | DETA/Oxalsäure | TETA/Oxalsäure | DETA/Oxalsäure |
| Polyammoniumsalzmenge | 73 | 62 | 73 | 62 |
| Epoxidharz 3) | 200 | 200 | 200 | 200 |

1) siehe Beispiel 1

2) Es handelt sich um den Polyvinylalkohol PVAL GH-20 (Hersteller : Fa. Nippon Synthetic Chemical Industry Co., Ltd., Osaka, Japan), der in Form einer 10 %igen wäßrigen Lösung eingesetzt wird.

3) Es handelt sich in allen Fällen um das Epoxidharz RÜTAPOX® VE 2913 (Hersteller : Fa. Bakelite, Duisburg).

b) Herstellung von Epoxidharz-Zement-Mörtel

Beispiele 10.1 bis 10.3

Zur Herstellung von Epoxidharz-Zement-Mörteln wurden Portlandzement 35 F, Sand, Wasser und Emulsion entsprechend der DIN 1164 gemischt und nach vierwöchiger Lagerung auf ihre Festigkeit geprüft. (Angaben in Gewichtsteilen)

| Mischungen | Beispiel 10.1 | Beispiel 10.2 | Beispiel 10.3 |
|---|---|---|---|
| Zement PZ 35 F | 100 | 100 | 100 |
| Wasser | 55 | 44,5 | 44 |
| Emulsion nach Beispiel 3 | - | 28,7 | - |
| Emulsion nach Beispiel 8 | - | - | 29 |
| Sand 0/1 mm | 230 | 230 | 230 |
| Sand 1/2 mm | 130 | 130 | 130 |

Biegezug- (BzF) und Druckfestigkeit (DF) nach 7 Tagen Feucht- und 21 Tagen Raumlagerung (A) bzw. nach 28 Tagen Raumlagerung (B) :

| Mischungen | Beispiel 10.1 | Beispiel 10.2 | Beispiel 10.3 |
|---|---|---|---|
| A: BzF ($N/mm^2$) | 8,7 | 9,6 | 9,4 |
| DF ($N/mm^2$) | 40,5 | 41,0 | 38,6 |
| B: BzF ($N/mm^2$) | 6,2 | 10,5 | 8,8 |
| DF ($N/mm^2$) | 27,0 | 38,0 | 32,5 |

c) Herstellung von Klebemassen

Beispiele 11.1 und 11.2

Zur Herstellung von Klebemassen wurde Portlandzement 35 F mit Emulsionen gemischt.

| Mischungen | Beispiel 11.1 | Beispiel 11.2 |
|---|---|---|
| Portlandzement 35 F | 100 | 100 |
| Emulsion nach Beispiel 1 | 55 | - |
| Emulsion nach Beispiel 8 | - | 50 |

Nach 3 Tagen Feucht- und 4 Tagen Raumlagerung der Prüfkörper wurden folgende Festigkeiten (in $N/mm^2$) ermittelt :

(Siehe Tabelle Seite 9 f.)

| | Beispiel 11.1 | Beispiel 11.2 |
|---|---|---|
| Biegezugfestigkeit | 9,2 | 11,0 |
| Druckfestigkeit | 61,5 | 67,3 |
| Haftzugfestigkeit | | |
| auf Stahl | 1,3 | 1,5 |
| auf Beton | 2,4 | 2,9 |

**Patentansprüche**

1. Epoxidharz-Polyammoniumsalz-Emulsion auf Basis eines flüssigen Epoxidharzes, eines latenten Härters der das Salz aus einem

a) Polyamin der Formel

$$H_2N\text{-}(CH_2\text{—}CH_2\text{—}NH)_x\text{-}H$$

mit x = 2, 3 und 4 oder deren aminogruppenhaltiges Umsetzungsprodukt mit Fettsäuren, mit

b) gegebenenfalls hydroxylgruppenhaltigen aliphatischen, cycloaliphatischen oder aromatischen Mono- oder Dicarbonsäuren mit bis zu 12 C-Atomen darstellt, eines Emulgators und Wasser, dadurch gekennzeichnet,

daß der Emulgator

a) ein durch Verseifung von Polyvinylacetat gewonnener Polyvinylalkohol mit einem Hydrolysegrad von mindestens 70 % und einem Molekulargewicht von mindestens 5 000,

b) ein Polyoxazolin mit einem Molekulargewicht von 10 000 bis 100 000 oder

c) ein Copolymerisat des N-Vinylpyrrolidons mit

Vinylestern ein- oder zweibasiger Carbonsäuren mit bis zu 6 C-Atomen,
(Meth)Acrylestern von ein- und zweiwertigen Alkoholen mit bis zu 6 C-Atomen,
Malein-, Fumar-, Crotonsäure und/oder
Styrol

ist.

2. Epoxidharz-Polyammoniumsalz-Emulsion gemäß Anspruch 1, dadurch gekennzeichnet, daß man ein in Wasser emulgierbares Epoxidharz einsetzt.

3. Epoxidharz-Polyammoniumsalz-Emulsion nach den Ansprüchen 1 und 2, dadurch gekennzeichnet, daß als Emulgator ein Polyvinylalkohol mit einem Molekulargewicht von 10 000 bis 100 000 eingesetzt wird.

4. Epoxidharz-Polyammoniumsalz-Emulsion nach den Ansprüchen 1 bis 3, dadurch gekennzeichnet, daß diese einen Entschaümer auf Silicon- oder Kohlenwasserstoffbasis enthält.

5. Verfahren zur Herstellung der Epoxidharz-Polyammoniumsalz-Emulsion nach den Ansprüchen 1 bis 4, dadurch gekennzeichnet,

daß man

a) ein wäßrige Lösung des Emulgators vorlegt,

b) gegebenenfalls einen Entschäumer zufügt,

c) die Säure zufügt,

d) soviel Polyamin zufügt, bis der pH-Wert der erhaltenen Lösung zwischen 6 und 6,5 liegt und

e) in die erhaltene Mischung das flüssige Epoxidharz einrührt.

6. Verwendung der Epoxidharz-Polyammoniumsalz-Emulsionen nach den Ansprüchen 1 bis 4 in Epoxidharz-Zement-Mörteln.

7. Verwendung der Epoxidharz-Polyammoniumsalz-Emulsionen nach den Ansprüchen 1 bis 4 in Härtungsmischungen, die alkalisch reagierende Stoffe und gegebenenfalls mineralische Füllstoffe enthalten.

8. Verwendung der Epoxidharz-Polyammoniumsalz-Emulsionen nach den Ansprüchen 1 bis 4 in Klebe- und Spachtelmassen auf Basis hydraulisch abbindender alkalischer Bindemittel.

**Claims**

1. An epoxy resin/polyammonium salt emulsion based on a liquid epoxy resin, a latent hardener which is the salt of

a) a polyamine of the formula

$$H_2N\text{-}(CH_2\text{—}CH_2\text{—}NH)_x\text{-}H,$$

where x is 2, 3 or 4, or its amino-group-containing reaction product with a fatty acid, with

b) an aliphatic, cycloaliphatic or aromatic mono- or di-carboxylic acid of up to 12 carbon atoms optionally substituted by hydroxy,

an emulsifier and water, characterised in that the emulsifier is

a) polyvinyl alcohol obtained by saponification of polyvinyl acetate and having a degree of hydrolysis of at least 70 % and a molecular weight of at least 5,000,

b) a polyoxazoline having a molecular weight of 10,000 to 100,000, or

c) a copolymer of N-vinylpyrrolidone with

a vinyl ester of a monobasic or dibasic acid of up to 6 carbon atoms,

a (meth)acrylic ester of a monohydric or dihydric alcohol of up to 6 carbon atoms,

maleic, fumaric or crotonic acid and/or

styrene.

2. An epoxy resin/polyammonium salt emulsion according to claim 1, characterised in that an epoxy resin which is emulsifiable in water is used.

3. An epoxy resin/polyammonium salt emulsion according to claim 1 or 2, characterised in that a polyvinyl alcohol having a molecular weight of 10,000 to 100,000 is used as emulsifier.

4. An epoxy resin/polyammonium salt emulsion according to any of claims 1 to 3, characterised in that it contains a silicon-based or hydrocarbon-based antifoaming agent.

5. A process for the production of an epoxy resin/polyammonium salt emulsion according to any of claims 1 to 4, characterised in that

a) an aqueous solution of the emulsifier is prepared,

b) optionally an antifoaming agent is added,

c) the acid is added,

d) enough of the polyamine is added so that pH of the resulting solution is from 6 to 6.5, and

e) the liquid epoxy resin is stirred into the resulting mixture.

6. The use of an epoxy resin/polyammonium salt emulsion according to any of claims 1 to 4 in epoxy resin/cement mortars.

7. The use of an epoxy resin/polyammonium salt emulsion according to any of claims 1 to 4 in hardening mixtures which contain alkaline-reacting substances and optionally mineral fillers.

8. The use of an epoxy resin/polyammonium salt emulsion according to any of claims 1 to 4 in adhesive and filling compositions based on hydraulically setting alkaline binding agents.

**Revendications**

1. Emulsion résine d'époxyde-sel de poly-ammonium à base d'une résine d'époxyde liquide, d'un durcisseur latent qui constitue le sel

a) d'une polyamine de la formule

$$H_2N\text{-}(CH_2\text{—}CH_2\text{—}NH)_x\text{-}H,$$

dans laquelle x = 2, 3 et 4, ou de son produit de réaction, contenant des groupes amines, sur des acides gras, avec

b) des acides mono- ou dicarboxyliques aliphatiques, cycloaliphatiques ou aromatiques contenant jusqu'à 12 atomes de carbone et contenant éventuellement des groupes hydroxyle, d'un émulsifiant et d'eau,

caractérisée par le fait que l'émulsifiant est

a) un alcool poly-vinylique obtenu par saponification de polyacétate de vinyle, ayant un degré d'hydrolyse d'au moins 70 % et un poids moléculaire d'au moins 5 000,

b) une poly-oxazoline ayant un poids moléculaire de 10 000 à 100 000 ou

c) un produit de copolymérisation de la N-vinyl-pyrrolidone avec

des esters de vinyle d'acides mono- ou dicarboxyliques contenant jusqu'à 6 atomes de carbone,

des esters d'acide (méth)acrylique de mono- et di-alcools contenant jusqu'à 6 atomes de carbone,

l'acide maléique, fumarique, crotonique et/ou

le styrène,

2. Emulsion résine d'époxyde-sel de poly-ammonium selon la revendication 1, caractérisée par le fait que l'on utilise une résine d'époxyde émulsifiable dans l'eau.

3. Emulsion résine d'époxyde-sel de poly-ammonium selon les revendications 1 et 2, caractérisée par le fait que l'on utilise comme émulsifiant un alcool polyvinylique d'un poids moléculaire de 10 000 à 100 000.

4. Emulsion résine d'époxyde-sel de poly-ammonium selon les revendications 1 à 3, caractérisée par le fait qu'elle contient un agent antimousse à base de silicone ou d'hydrocarbure.

5. Procédé pour la fabrication de l'émulsion résine d'époxyde-sel de poly-ammonium selon les revendications 1 à 4, caractérisée par le fait

a) que l'on place initialement une solution aqueuse de l'émulsifiant,

b) que l'on ajoute éventuellement un agent antimousse,

c) que l'on ajoute l'acide,

d) que l'on ajoute assez de polyamine pour que le pH de la solution obtenue se situe entre 6 et 6,5 et

e) que dans le mélange obtenu, on introduit avec agitation la résine d'époxyde liquide,

6. L'utilisation des émulsions résine d'époxyde-sel de poly-ammonium selon les revendications 1 à 4 dans des mortiers résine d'époxyde-ciment.

7. L'utilisation des émulsions résine d'époxyde-sel de poly-ammonium selon les revendications 1 à 4 dans des mélanges de durcissement qui contiennent des corps à réaction alcaline et éventuellement des charges minérales.

8. L'utilisation des émulsions résine d'époxyde-sel de poly-ammonium selon les revendications 1 à 4 dans des masses adhésives et des mastics à base de liants alcalins à prise hydraulique.